# EUROPEAN PATENT APPLICATION

(11) **EP 4 589 781 A1**
(43) Date of publication of application: **23.07.2025**
(21) Application number: 24152451.1
(22) Date of filing: 17.01.2024
(51) Int. Cl.: H01R 11/16, H01R 4/36, H01R 4/62, H01R 4/02

(54) **JOINT CONNECTOR FOR POWER CABLES**

(71) Applicant: NKT HV Cables AB, 371 60 Lyckeby (SE)
(72) Inventor: LARSSON, Gustaf, Lyckeby (SE); TYRBERG, Andreas, Lyckeby (SE); HEDLUND, Johan, Karlskrona (SE)
(74) Representative: Kransell & Wennborg KB

(57) **Abstract**

A joint connector (10) for connecting a first conductor (2) of a first power cable length (3) and a second conductor (4) of a second power cable length (5), the first conductor (2) comprising a first metal material and the second conductor (4) comprising a second metal material, the second metal material being different from the first metal material, wherein the joint connector (10) comprises a tubular metal body (11) being made of the second metal material and having a central axis (a) extending from a first end (13) of the metal body to a second end (14) of the metal body, wherein the first end (13) is provided with an axially extending opening (15) adapted to receive the first conductor (2), and wherein the metal body (11) comprises at least one radially extending through-opening (16), connecting with the axially extending opening (15), the radially extending through-opening (16) being adapted to receive at least one fastener (17) for clamping the first conductor (2) when received within the axially extending opening (15), and wherein the second end (14) is a closed end, the closed end comprising an end face adapted to be welded to the second conductor (4).

## Description

### Technical field

The present disclosure relates to a joint connector for power cables. In particular, it relates to a joint connector for joining two power cables lengths having conductors of different materials, and to a power cable comprising such joint connector.

### Background

A power cable may comprise one or more conductors, each usually disposed radially inwards of a layer of insulating material. A variety of metal materials may be used for the conductors, including copper and aluminum. While aluminum conductors have a cost advantage over copper, the conductivity of copper is higher which might be required in some situations.

For example, a power cable used for transmission of power between an offshore application and an onshore application may include both a subsea section and a land section. Due to the lower subsea temperature, an aluminum conductor is sufficient at the subsea section, whereby costs can be saved. However, copper is still required at the land sections due to the higher temperature. There is thus a need to join two conductors of dissimilar metal material.

One previously known solution for producing a joint between two metal conductors is the use of a sleeve or collar enclosing the part of the cable where the two conductors meet.

Another previously known solution is to use a joint piece having a first end made of a first metal (the same as the first conductor), and a second end made of a second metal (same as second conductor). The two ends of the joint piece being connected to each other by friction welding, and then welded to the respective conductors.

There is a need for providing an improved solution for joining conductors of different materials.

### Summary

In view of the above, according to a first aspect a joint connector for connecting a first conductor of a first power cable length and a second conductor of a second power cable length is provided, the first conductor comprising a first metal material and the second conductor comprising a second metal material, the second metal material being different from the first metal material, wherein the joint connector comprises a tubular metal body being made of the second metal material and having a central axis extending from a first end of the metal body to a second end of the metal body; wherein the first end is provided with an axially extending opening adapted to receive the first conductor, and wherein the metal body comprises at least one radially extending through-opening, connecting with the axially extending opening, the radially extending through-opening being adapted to receive at least one fastener for clamping the first conductor when received within the axially extending opening; wherein the second end is a closed end, the closed end comprising an end face adapted to be welded to the second conductor.

The solution builds on the realization that by providing a joint connector which may be welded to one conductor and screw clamped onto the other, the jointing of two conductors comprising different metal materials might be improved as the joint connector may take into account the different material properties of the conductor materials. For example, for some materials such as copper, it might be most efficient to use a screw connector while for other materials, welding might be preferred. The joint connector may thus be adapted to the different conductor materials at hand.

According one embodiment, the tubular metal body has a first radius at the first end and a second radius, smaller than the first radius, at the second end, and a radial transition where the radius of the tubular metal body transitions from the first radius to the second radius.

The radial transition may be a radial step. Alternatively, the radial transition may be a gradual transition.

The portion of the metal tube having a smaller radius, and extending between the radial transition and the second end, may be defined as a rod.

While the metal body at its first end need to have a larger radius than the first conductor, for being able to receive the first conductor by the axially extending opening, the diameter at the second end only needs to be as large as the second conductor. Thus, by providing a joint connector in which the metal body has a larger radius at the first end than at the second end, material may be saved as compared to a straight joint connector.

However, a straight joint connector may also be an option in some situations, such as when the second conductor has a larger radius than the first conductor.

According to one embodiment, the axially extending opening and the at least one radially extending through-opening are arranged between the first end of the metal body and the radial transition.

According to one embodiment, the first metal material is copper or a copper alloy.

The first conductor may thus be a copper conductor, or a copper alloy conductor. The joint connector may be especially suitable for applications in which the first conductor is a copper conductor, as the material properties of copper make these conductors suitable for use in a screw clamp connector.

According to one embodiment, the second metal material is aluminum or an aluminum alloy.

The second conductor may thus be an aluminum conductor, or an aluminum alloy conductor.

The joint connector may be especially suitable for applications in which the second conductor is an aluminum conductor, as these conductors are suitable for welding.

Apart from the benefits mentioned above when the first metal material is copper or a copper alloy and the second metal material is aluminum or an aluminum alloy, this specific combination of conductors may be particularly suitable for the joint connector of the present disclosure, since aluminum has a higher heat expansion coefficient than copper. Thereby, as heat increases in the conductors and the joint connector, the first conductor is will not expand more than the metal body, whereby damage to the joint connector and the first conductor may be prevented.

According to one embodiment, the second end has an end surface defining a first plane that intersects a transverse plane of the metal body.

Hereby, welding of the second conductor to the second end may be facilitated.

According to one embodiment, the angle between the first plane and the transverse plane is in a range of 20° to 40°.

An angle of 20°-40°, such as 25°-35°, between the first plane and the transverse plane has been shown to improve the welding of the second end to the second conductor as compared to other angles.

According to one embodiment, a central axis of the axially extending opening essentially coincides with the central axis of the metal body.

Thereby, a rotationally symmetrical joint connector can be provided, which may both facilitate production and optimize the space taken up by the joint.

According a second aspect, a power cable comprising a first conductor and a second conductor is provided, the first conductor comprising a first metal material and the second conductor comprising a second metal material, the second metal material being different from the first metal material, the power cable further comprising a joint connector in accordance with the first aspect connecting the first conductor and the second conductor.

A power cable comprising different conductor materials may thus be achieved. The effects of this second aspect are largely analogous to those of the first aspect.

### Brief Description of the Drawings

These and other aspects of the present inventive concept will now be described in more detail, with reference to the appended drawings showing example embodiments of the inventive concept, wherein:
Fig. 1 schematically illustrates a perspective view of an example of a joint connector.
Fig. 2 schematically illustrates a longitudinal section of the joint connector in Fig. 1.
Fig. 3 schematically illustrates a conductor joint of a power cable comprising the joint connector in Fig. 1.
Fig. 4 schematically illustrates a power cable comprising a joint connector according to an embodiment of the present disclosure.

### Detailed Description of Example Embodiments

In the present detailed description, various embodiments of the disclosure are described.

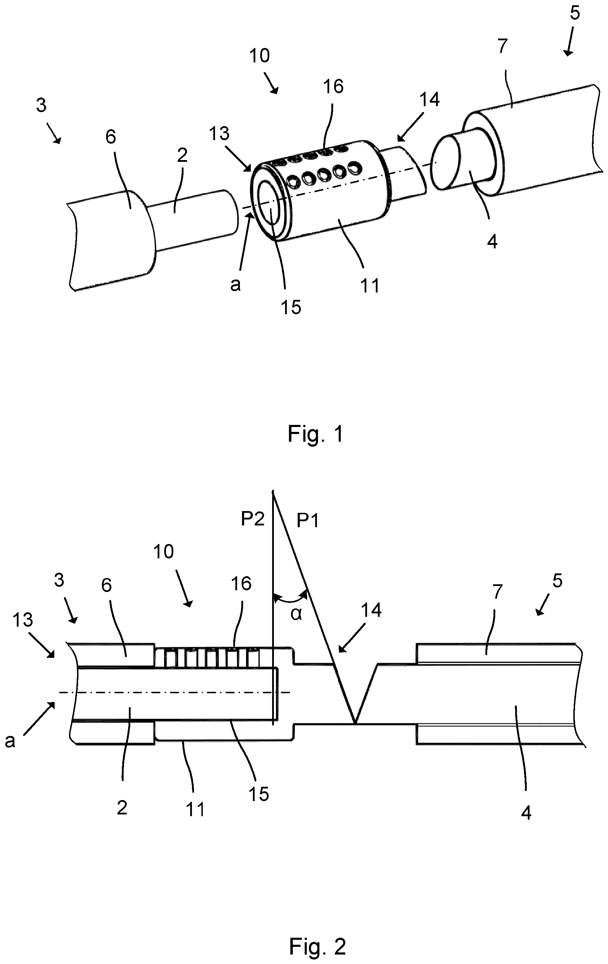

Fig. 1 schematically illustrates a joint connector 10 according to an embodiment of the present disclosure. The joint connector 10 is in Fig. 1 adapted to connect a first conductor 2 of a first power cable length 3 with a second conductor 4 of a second cable power length 5. The first and second power cable lengths 3, 5 may be high voltage power cable lengths.

The conductors 2, 4 of the first and second power cable lengths 3, 5 are surrounded by a first and second insulation system 6, 7, respectively. To prepare the conductors 2, 4 for the jointing, part of the first and second insulation system 6, 7 has been removed from the first and second conductors 2, 3 to expose a respective end portion of the conductors 2 and 4 which are to be jointed. For example, 50-300 mm of the first insulation system 6 may be removed from the end of the first conductor 2, and 50-100 mm of the second insulation system 7 may be removed from the end of the second conductor 4. The total length of the joint connector 10 may for example be from 100-450 mm.

In case the power cable lengths to be joined each comprise several power cores, each pair of power cores to be joined may be joined by means of a respective joint connector 10.

The first and second power cable lengths 3, 5 are cut off in the figures for illustrative purposes but should be understood to continue further away from the joint connector 10. For example, the first power cable length 3 may be connected to an on-shore facility and the second power cable length 5 may be connected to an off-shore facility. Alternatively, one or both power cable lengths 3, 5 may be connected to further power cable lengths.

The first conductor 2 comprises a different metal material than the second conductor 4. For example, the first conductor 2 may comprise copper while the second conductor 4 may comprise aluminum. The conductors 2, 4 may for example be solid, stranded and/or segmental conductors, and may be made in various shapes.

The joint connector 10 comprises a tubular metal body 11. The material of the metal body 11 is preferably the same as the material of the second conductor 4.

The tubular metal body 11 has a first end 13 and a second end 14. A central axis a extends between the first end 13 and the second end 14. The first end 13 is provided with an axially extending opening 15 extending parallel with the axis a. The shape and size of the axially extending opening 15 is chosen to allow for the first conductor 2 to be received by the axially extending opening 15. The axially extending opening 15 may thus have a shape matching that of the first conductor 2, such as a circular shape, and a radius which is slightly larger than the radius of the first conductor 2. If the conductor end has been provided with a stepped configuration, the inner surface of the radially extending opening 15 may also comprise a plurality of steps, the steps having a successively decreasing diameter from the first end 13 towards the second end 14.

The term tubular should be understood as an elongated and generally or partly hollow shape. Thus, while the tubular metal body 11 is in Fig. 1 illustrated as a cylindrical metal body, other shapes are also possible. Furthermore, the axially extending opening 15 is not required to extend through the entire metal body 11 for the metal body 11 to be defined as tubular.

The metal body 11 further comprises a plurality of radially extending through-openings 16. The radially extending through-openings 16 are adapted to receive fasteners 17, such as screws (not shown in Fig. 1), for clamping the first conductor 2 when it is received in the radially extending opening 15. The radially extending through-openings 16 may have threaded inner surfaces. When the first conductor 2 is received by the axially extending opening 15, fasteners 17 may be inserted into each of the through-openings 16 to clamp the first conductor 2 between the fasteners 17 and an inner wall of the axially extending opening 15.

In the example in Fig. 1, the metal body 11 comprises a total of fifteen through-openings 16 arranged in three rows at the top half of the metal body 11. It should be understood that other configurations are possible with regards to the number of through-openings 16 and their distribution around the metal body 11. For example, the through-openings 16 may be distributed around the entire circumference of the metal body 11 such that the first conductor 2 is adapted to be clamped by the fasteners 17 only.

In Fig. 1, the tubular metal body 11 comprises a radial transition between the first end 13, having a first radius, and the second end 14, having a second radius, such that the first radius at the first end 13 is larger than the second radius at the second end 14. The axially extending opening 15 and the radially extending through-openings 16 are arranged between the first end 13 and the radial transition. The portion of the metal body 11 which extends between the radial transition and the second end 14, and which has the smaller radius, may be defined as a rod.

The rod is adapted to be welded to the second conductor 4, and the shape and radius of the rod thus preferably matches the shape and radius of the second conductor 4. To facilitate welding of the rod to the second conductor 4 the end of the rod to which the conductor 4 is adapted to be welded has an angled surface. For the same reason, an end of the second conductor 4 has an angled surface.

In Fig. 1, the rod and the second conductor 4 each has one angled end surface which allows for a V-weld to be performed. In other embodiments, the rod and the second conductor 4 could each comprise two angled end surfaces which would allow for a X-weld to be performed.

Fig. 2 schematically illustrates a longitudinal section of the joint connector 10 along the central axis a, with the first conductor 2 received by the axially extending opening 15 and the second conductor 4 being arranged in contact with, or close to, the rod such that welding may be performed.

The axially extending opening 15 extends from the first end 13 of the metal body 11, and the insulation system 6 of the first power cable length 3 has been removed to such a length that the bare first conductor 2 can be received into the axially extending opening 15. The length of the axially extending opening 15 may for example be from 50-300 mm.

The through-openings 16 may be evenly distributed along the length of the bared first conductor 2 and an even clamping pressure may thus be provided to the first conductor as the fasteners 17 are inserted into the through-openings 16 and tightened.

In Fig. 2 the angled surface of the rod is more clearly shown, and it can be seen that the rod has an end surface defining a first plane P1 that intersects a transverse plane P2 of the metal body 11, such that an angle α is formed between the first plane P1 and the transverse plane P2. The angle α may be from 20°-40°, such as 30° to facilitate welding between the rod and the second conductor 4.

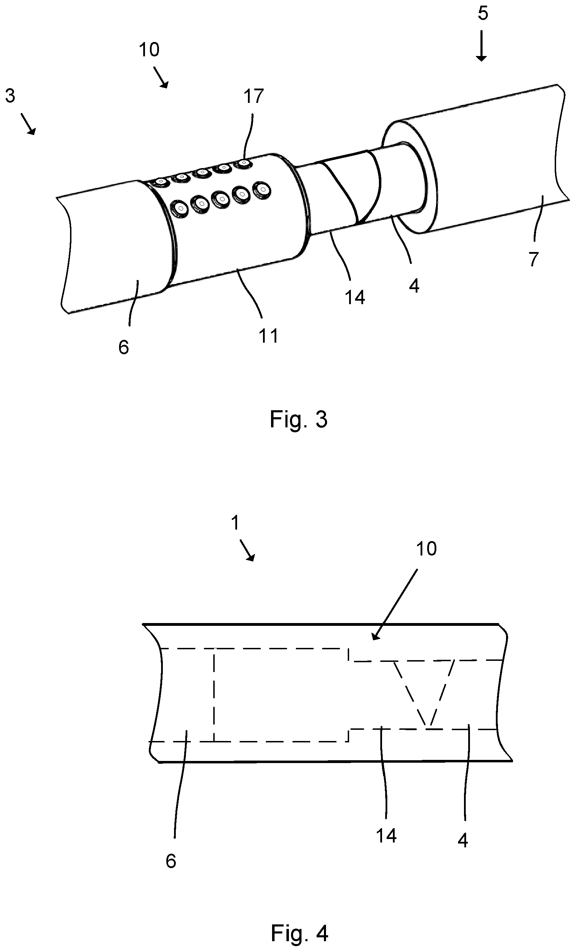

In Fig. 3 the second conductor 4 has been welded to the rod and fasteners 17 in the form of screws have been arranged in each of the through-openings 16 to clamp the first conductor 2 to the metal body 11. The first conductor 2 and the second conductor 14 has thereby been mechanically and electrically connected to each other using the joint connector 10.

The screws may be shear-off screws. The heads of shear-off screws are designed to shear off when the screws are tightened above a threshold value. A permanent clamping of the first conductor 2 is thereby achieved.

Fig. 4 depicts the joint after a joint insulation system has been arranged over the joint over the joint connector 10. Thus, the first insulation system 6 of the first power cable length 3 has been connected to the second insulation system 7 of the second power cable length 5 to provide a continuous insulation system over the conductor joint comprising the joint connector 10. Fig. 4 thus shows a power cable 1 having the first conductor 2, the second conductor 4 connected by the joint connector 10.

Even though specific exemplifying embodiments have been described herein, many different alterations, modifications and the like within the scope of the claims will become apparent for those skilled in the art.

Additionally, variations to the disclosed embodiments can be understood and effected by the skilled person in practicing the claimed disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A joint connector (10) for connecting a first conductor (2) of a first power cable length (3) and a second conductor (4) of a second power cable length (5), the first conductor (2) comprising a first metal material and the second conductor (4) comprising a second metal material, the second metal material being different from the first metal material, wherein the joint connector (10) comprises:
a tubular metal body (11) being made of the second metal material and having a central axis (a) extending from a first end (13) of the metal body to a second end (14) of the metal body,
wherein the first end (13) is provided with an axially extending opening (15) adapted to receive the first conductor (2), and wherein the metal body (11) comprises at least one radially extending through-opening (16), connecting with the axially extending opening (15), the radially extending through-opening (16) being adapted to receive at least one fastener (17) for clamping the first conductor (2) when received within the axially extending opening (15), and
wherein the second end (14) is a closed end, the closed end comprising an end face adapted to be welded to the second conductor (4).

2. The joint connector (10) according to claim 1, wherein the tubular metal body has a first radius at the first end (13) and a second radius, smaller than the first radius, at the second end (14), and a radial transition where the radius of the tubular metal body (11) transitions from the first radius to the second radius.

3. The joint connector (10) according to claim 2, wherein the axially extending opening (15) and the at least one radially extending through-opening (16) are arranged between the first end (13) and the radial transition.

4. The joint connector (10) according to any one of claims 1-3, wherein the first metal material is copper or a copper alloy.

5. The joint connector (10) according to any one of claims 1-4, wherein the second metal material is aluminum or an aluminum alloy.

6. The joint connector (10) according to any one of claims 1-5, wherein the second end (14) has an end surface defining a first plane (P1) that intersects a transverse plane (P2) of the metal body (11).

7. The joint connector (10) according to claim 6, wherein the angle between the first plane (P1) and the transverse plane (P2) is in a range of 20° to 40°.

8. The joint connector (10) according to any one of claims 1-7, wherein a central axis of the axially extending opening (15) essentially coincides with the central axis (a) of the metal body (11).

9. A power cable (1) comprising a first conductor (2) and a second conductor (4), the first conductor (2) comprising a first metal material and the second conductor (4) comprising a second metal material, the second metal material being different from the first metal material, the power cable (1) further comprising a joint connector (10) in accordance with any one of claims 1-8 connecting the first conductor (2) and the second conductor (4).
